# EUROPEAN PATENT SPECIFICATION

(11) **EP 2 397 630 B1**
(45) Date of publication and mention of the grant of the patent: **02.01.2013**
(21) Application number: 10166311.0
(22) Date of filing: 17.06.2010
(51) Int. Cl.: E05D 5/06, B62D 25/08, B62D 25/12

(54) **Beam member assembly comprising a beam member and a hood hinge for a hood of a vehicle**
Trägeranordnung mit einem Träger und einem Haubenscharnier für eine Motorhaube eines Fahrzeugs
Ensemble d'élément de faisceau comportant un élément de faisceau et une charnière de capot pour le capot d'un véhicule

(43) Date of publication of application: 21.12.2011
(73) Proprietor: Volvo Car Corporation, 405 31 Göteborg (SE)
(72) Inventor: Landholm, Robert, 45991, Ljungskile (SE); Lindmark, Peter, 42243, Hisings Backa (SE)
(74) Representative: Widahl, Jenny Marie

(56) References cited:
- EP-A2- 1 743 827
- DE-A1- 4 417 380

## Description

### TECHNICAL FIELD

The present invention relates to a beam member assembly comprising a beam member and a hood hinge for opening and closing a hood of an engine compartment of a vehicle in accordance with the preamble of claim 1. Such an assembly is disclosed in document EP 1 743 827.

### BACKGROUND OF THE INVENTION

Engine compartments of most vehicles are equipped with a hood covering the engine compartment. Such hoods are, via one or more hood hinges between the hood and a structure of the vehicle, arranged such that the hood can be opened or closed over the engine compartment.

Korean patent document KR 20040088833 A shows a hood hinge being arranged within the engine compartment of a vehicle, which hood hinge is positioned on a structure or frame of the vehicle, more particularly on a structure for the engine compartment. The arrangements of the hood hinge in the Korean patent document leads to that a fairly large amount of the space within the engine compartment is used for arranging the hood hinge inside the engine compartment. This leads to that the engine compartment needs to be designed having a quite large internal volume in order to be able to house the engine and other vital elements within the engine compartment.

The hood hinge as shown in the Korean patent document is arranged in a part inside the engine compartment along the sides of the engine compartment on the upper part of the structure adjacent to the hood. Hood supports are arranged on the upper part of the structure. The hood supports are a number of elements connected to the structure in order for the hood to rest upon when the hood is in a closed position over the engine compartment. Without the hood supports the hood would be fairly unstable, as the hood would be connected with the vehicle via the hood hinge and with the front part of the hood resting against the front part of the engine compartment. The hood supports instead provide a number of resting points, whereby the weight of the hood is distributed on many different points, thus providing a more stable arrangement of the hood when closed over the engine compartment. However, the drawback due to the distance is that these hood supports needs to be made of strong and durable material in order to withstand wear and movements from the vehicle. Further, in order to assure that the hood rests without a loose fit against the hood supports, each separate hood support has to be carefully measured and adjusted in order to assure that the hood rests against the respective hood support.

The hood hinge of the Korean patent document is further exposed for possible moving parts or objects within the engine compartment. The exposure of the hood hinge, within the engine compartment, may lead to the hood hinge being damaged because of the possibility that something might punch into the hood hinge or e.g. get stuck on it and thus cause a damage to the hood hinge. In prior art attempts have been made to overcome this drawback by enclosing the hood hinge with a casing and thus surrounding the hood hinge. However, such an enclosure has had the drawback of being big and thus requiring a fairly large amount of the internal space within the engine compartment.

### SUMMARY OF THE INVENTION

An object of the invention is to provide a beam member assembly which may reduce internal exposure of a hood hinge within an engine compartment when said hood hinge is moving during opening and closing a hood over the engine compartment.

Another object of the invention is to protect the hood hinge within the engine compartment from possible moving parts or elements, or from accidental damage when someone is working within the engine compartment.

The aforesaid, and other objects, are achieved by means of the device in accordance with the independent claim.

An advantage achieved by the features as described in the independent claim is that empty and unused space within a beam member of the beam member assembly may be utilized as a casing-like element being adapted for receiving part of the hood hinge which is movable upon closing and opening of the hood over the engine compartment.

Another advantage of the features as described in the independent claim is that, when the hood is in closed position, the hood hinge is contained within the beam member and is thus protected from possible moving parts or elements within the engine compartment which could upon an impact against the hood hinge and damage the hood hinge.

Further embodiments of the invention are detailed in the dependent claims.

In accordance with an aspect, the beam member assembly may comprise six longitudinally-arranged folds. An elongated surface is arranged between each two adjacent folds of said folds. In total six such surfaces are arranged between each pair of folds comprising said surface around the beam member and connected to each other via the folds. A fold shall be understood as a part which connects two adjacent surfaces with each other such that the surfaces form an angle with respect to each other. Alternatively, a fold may be created upon bending a surface along a line through said surface whereby the surface is divided in two sections having the fold separating the surfaces.

In accordance with one aspect, the longitudinal folds in the beam member may be parallel with respect to each other. An effect of this is that a substantially uniform rigidity along each unit of length along the elongation of the beam member is achieved. This is of importance inter alia when an impacting force of a body accidently impacts with the vehicle, e.g. in an accident, and the impacting force has a direction towards and intersecting with the side of the beam member. In order for the beam member to provide the same rigidity for each unit of length, independently of where along the beam member the impact occurs, the beam member therefore has to have a uniform rigidity. If the rigidity differs along the length of the beam member then an impacting force would be absorbed differently depending on where the impacting force contacts the beam member.

In accordance with one aspect, the beam member may have a substantially hexagonal shape in the cross section. This has the effect that the beam member is rigid in its elongation. The beam member may, upon an impact, collapse in a direction across the beam member, whereby an impacting force can thus be absorbed upon collapsing of the beam member.

In accordance with another aspect, the beam member may have a closed cross section. An effect of said closed cross-section is that such a structure becomes rigid. A force parallel to the elongation of said beam member towards and against the beam member is due to the closed structure distributed uniformly in the beam member. Another effect of said closed cross-section is that it is easier and more cost effective to extrude a beam having a closed cross-section than a beam having an open cross-section.

In accordance with another aspect, the beam member may be made of aluminium. The choice of aluminum is advantageous because aluminum is a material which can be easily extruded. Aluminium, or other materials with similar characteristics as aluminium, has a fairly low melting point allowing it to be machined easily. Metallic materials, such as aluminium or other equivalent materials similar to aluminium, provides a softness compared to other metallic materials, such as e.g. iron, which are hard, making them very suitable for e.g. extrusion. By using material, such as aluminium, the tools needed for extrusion thus may be made of materials which do not have to be able to withstand very hard materials and high temperatures. Usually materials which can withstand hard materials, wear and high temperatures are quite exclusive and thus, as a consequence, more expensive than other materials. Therefore, the tools needed for extrusion of aluminium beams can be made of materials providing for a fairly low cost tool compared to a tool used for harder materials, such as e.g. iron.

In accordance with another aspect of a vehicle front structure comprising the beam member assembly, said beam member may be arranged in said vehicle such that the opening faces upwards. The opening facing upwards is a preferred design as the hood is configured to be arranged over the engine compartment, and thus above the beam member. In order to have the hood hinge cooperating with the interior of the beam member an opening, arranged such that it faces upwards, is therefore the preferred position, as the hood hinge is arranged such that it is able to enter into the interior of the beam member upon closing the hood.

In accordance with another aspect, the opening may be a cut-out. The cut-out is achieved by a piece of the surface being removed, either by cutting or machining of said piece from an edge part of the surface. The opening due to the cut-out in the surface will thus have a so-called open side. The open side is arranged at an end part of the beam member and thus directed towards the front window or rear of the vehicle.

In accordance with another aspect, the opening may be arranged at an end part of the beam member, which end part is adapted to be arranged adjacent to a front window of the vehicle. The position of the opening in the end part is due to the fact that the hood opens upwards from the front of the vehicle via the hood hinges, which hood hinges collaborate with said openings and thus are arranged adjacent to the front window.

In accordance with another aspect, the hood hinge may pivot perpendicular to the longitudinal extension of the opening. This has the effect that the hood can be opened from the front in a lifting manner, such that that a rear edge portion of the hood is located substantially adjacent to lower portion of the front window.

In accordance with another aspect, the hood hinge may be arranged within the beam member, when the hood is in a closed position. This has the effect that the hood hinge is protected from possible moving parts within the engine compartment.

In accordance with another aspect, the hood hinge bracket may be attached with the beam member via a connection area on the beam member, the connection area has an elongation which is substantially parallel with the folds. The hood hinge is connected to the hood hinge bracket via an axle-like element adapted to provide the hood hinge to be able to move around said axle-like member in the hood hinge bracket. The hood hinge bracket with the hood hinge is then connected above the opening via the connection areas and thus provides the possibility for the hood hinge to be movable between the interior and the exterior of the beam element.

### BRIEF DESCRIPTION OF THE DRAWINGS

The present invention will hereinafter be explained in greater detail by means of nonlimiting examples and with reference to the appended drawings in which:
Fig. 1 is a view of vehicle illustrating the engine compartment and the hood in an open position.
Fig. 2 is a view of a beam member assembly comprising a beam member and hood hinge and hood hinge bracket arranged thereat.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

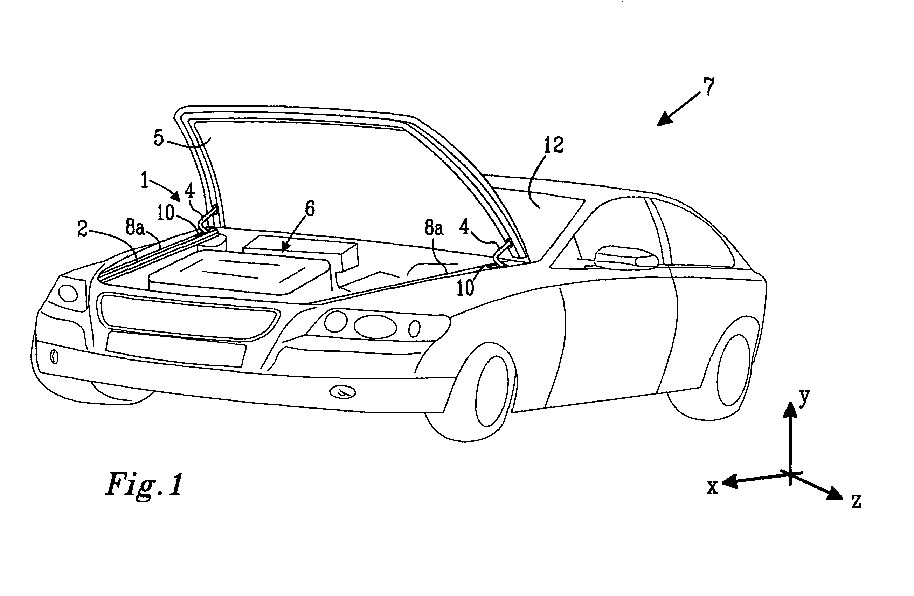

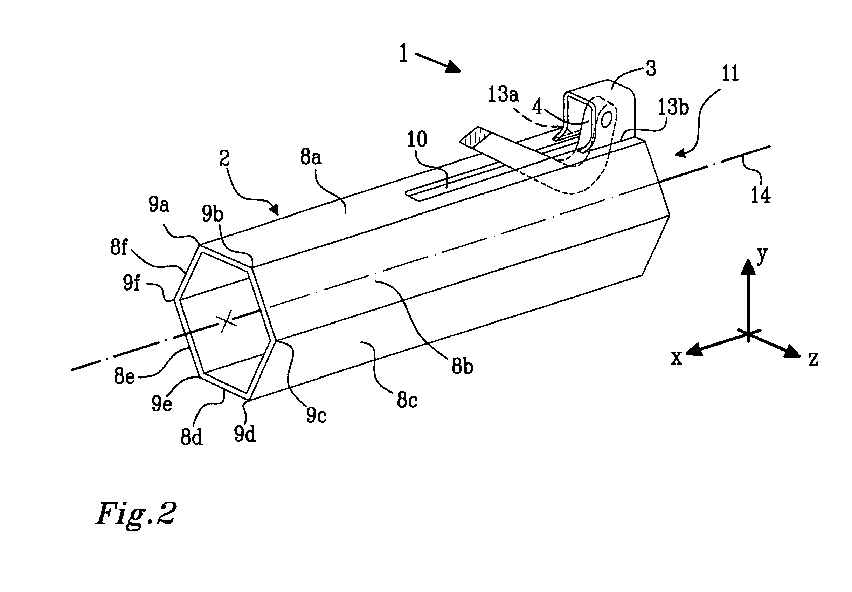

Fig. 1 shows a beam member assembly 1 comprising a beam member 2 and a hood hinge bracket 3, see Fig. 2, and a hood hinge 4. The hood hinge 4 is connected with a hood/bonnet 5 being arranged for opening and closing an engine compartment 6 of a vehicle 7. The beam member assembly 1 extends partly longitudinally on opposite sides and partly on an upper part of the engine compartment 6. The beam member 2 further extends above a respective front wheel area of the vehicle 7, not shown in figure 2. The beam member 2 comprises a peripheral surface 8a. Further, the beam member 2 comprises a number of longitudinally-arranged folds 9a, 9b, 9c, 9d, 9e, 9f, see Fig. 2. The beam member 2 is arranged with an opening 10 which is arranged to be faced upwards. Said opening is arranged for collaborating with said hood hinge 4 such that the hood hinge is able to move within the opening 10. The beam member 2 in the vehicle 7 has an orientation such that an end part 11, see Fig. 2, of the beam member 2 is arranged adjacent to a front window/windshield 12 of the vehicle 7. The hood 5 is in an open position in Fig. 1. In each corner area, at its rear end edge portion the hood 5 is connected to one hood hinge respectively.

Fig. 2 shows the beam member assembly 1 adopted to be arranged in the vehicle 7, as shown in Fig. 1. The beam member assembly 1 comprises a number of peripheral surfaces 8a, 8b, 8c, 8d, 8e, 8f adjoined together via the six longitudinal folds 9a, 9b, 9c, 9d, 9e, 9f forming a hollow profile of the beam member 1. Surfaces 8a, 8b, 8c, 8d, 8e, 8f are arranged between two adjacent longitudinal folds of said folds 9a, 9b, 9c, 9d, 9e, 9f a. The folds 9a, 9b, 9c, 9d, 9e, 9f are parallel with respect to each other in the beam member 1. Seen in cross-section the beam member 2 has a hexagonal shape. The hexagonal shape is advantageous upon an impact of body against the vehicle 7 creating an impact force having a direction intersecting with the longitudinal direction of the beam member assembly 1. When said impacting force is of sufficient magnitude against the vehicle front part it will affect the beam member 2 such that the beam member 2 deforms at the point of impact on the beam member 2. Upon deformation, the impacting force is absorbed within the beam member 2. Due to the hexagonal cross-section shape of the beam member 2, positions of at least three of said folds 9a, 9b, 9c, 9d, 9e, 9f on the beam member 2 are displaced near the location of the point of impact. At least two folds of said three folds will be moved in a direction away from a centre axis (14) through the beam member 2. At least one fold will be moved in a direction towards the centre axis (14). The folds 9a, 9b, 9c, 9d, 9e, 9f may, upon an impact, be described as functioning like a joint between two shafts connected with each other via their end portions. Upon an impact force causing a movement of one first shaft, the other, second shaft, is directly affected by the movements of the first shaft whereby the impacting force, which caused the movements, is being absorbed by the movements between the connected shafts.

The beam member 2 has a closed cross-section. The closed cross-section provides for that a force acting against the beam member 2 can be distributed over the whole area of the beam member 2. A closed cross section is further of advantage upon extrusion of a beam.

The beam member 2 is preferably made from aluminium. Aluminium is a material which has a fairly low cost and which is easy to machine and form as it is fairly soft compared to harder metallic materials such as e.g. iron. Even though aluminium is considered as a soft metallic material enough rigidity is achieved due to the hexagonal shape of the beam member 2.

The opening 10 in the beam member assembly 1 is arranged such that it faces upwards. The opening 10 may be e.g. either machined or cut out from the elongated surfaces 8a arranged on an upper part of the beam member 2. A cut out may be made by e.g. milling or stamping. The opening 10 may be a so called closed hole, or a so-called open hole. The opening 10 being a closed hole has an edge portion surrounding the hole with the surface 8a. If the opening 10 instead is a so called open hole, the opening 10 has an open side not comprising an edge portion. It may for instance be a cut out which is open to the edge portion. The construction of an open hole may be made through the removal of a part of the surface 8a at the end part 11 of the beam member 2. The open hole may be exemplified as having the shape of a U.

Alternatively, said opening being a so called open hole may be made in that the upper elongated surface 8a has a central position between two other arranged elongated surfaces 8b, 8f. The opening is achieved such that the central elongated surface 8a is displaced with respect to the two other surfaces thus creating an opening between said two surfaces 8b, 8f. The displacement of the central elongated surface may also be achieved in that the central elongated surface 8a is shorter than the two surfaces 8b, 8f, between which the central elongated surface 8a is arranged.

The hood hinge 4 is arranged over the opening 10 having an elongation parallel with the longitudinal arrangement of the beam member 2. The hood hinge 4 is connected to the hood hinge bracket 3 via an axle-like member. The connection between the hood hinge 4 and the hood hinge bracket 3 allows the hood hinge 4 to be able to pivot with respect to the hood hinge bracket 3. The hood hinge bracket 3 is arranged to be connected on each side of the opening 10 via a respective connection area 13a, 13b. The connection areas 13a, 13b, are substantially parallel to the folds 9a, 9b, 9c, 9d, 9e, 9f of the beam member 2. The hood hinge bracket 3 may be connected to the connection areas 13a, 13b e,g, by welding, brazing, gluing, fastening elements, or other means which would fix or attach the hood hinge bracket 3 to the beam member 2.

The hood hinge bracket 3 and the hood hinge 4 must have such a connection with the beam member 2 that, upon an impact force having a direction towards the front part of the vehicle, the hood hinge bracket 3 and the hood hinge 4 must be able to withstand the force from the hood 5, to prevent the hood 5 from entering the front window 12 of the vehicle 7. Upon an impacting force having a direction against the front of the vehicle 7 the hood 5 is arranged to deform such that it folds in a direction towards the hood hinge bracket 3 and the hood hinge 4, without continuing into the front window 12.

The opening 10 and the beam member assembly 1 are arranged such that when the hood 5 is in a closed position over the engine compartment 6, said hood hinge 4 is arranged within the interior of the beam member 2.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art. It is the intention, therefore, to be limited only as indicated by the scope of the claims appended hereto.

## Claims

1. A beam member assembly (1) comprising a beam member (2) having a longitudinal extension and a hood hinge bracket (3) to which a hood hinge (4) for opening and closing a hood (5) of an engine compartment (6) of a vehicle (7) is attachable, said beam member (2) having a hollow profile formed by a peripheral surface (8a, 8b, 8c, 8d, 8e, 8f) having a number of longitudinally arranged folds (9a, 9b, 9c, 9d, 9e, 9f) and which beam member (2) is adapted to extend longitudinally along an upper part of the engine compartment (6), **characterised in that** said peripheral surface (8a, 8b, 8c, 8d, 8e, 8f) has an opening (10) arranged between two adjacent folds (9a, 9b), said opening (10) and said hood hinge bracket (3) being arranged with respect to each other such that, when said hood hinge (4) is attached to said hood hinge bracket (3), said hood hinge (4) is movable between an exterior and an interior of the beam member (2).

2. The beam member assembly (1) according to claim 1, **characterised in that** the beam member (2) comprises six longitudinally arranged folds (9a, 9b, 9c, 9d, 9e, 9f).

3. The beam member assembly (1) according to any of claims claim 1 - 2, **characterised in that** the longitudinally arranged folds (9a, 9b, 9c, 9d, 9e, 9f) in the beam member (2) are parallel with respect to each other.

4. The beam member assembly (1) according to any of claims 1 - 3, **characterised in that** the beam member (2) has a substantially hexagonal cross-sectional shape.

5. The beam member assembly (1) according to any of claims 1 - 4, **characterised in that** the beam member (2) has a closed cross-section.

6. The beam member assembly (1) according to any of claims 1 - 5, **characterised in that** the beam member (2) is made from aluminium.

7. A vehicle front structure comprising the beam member assembly (1) of any of the preceding claims, **characterised in that** said beam member (2) is arranged in said vehicle (7) such that said opening (10) faces upwards.

8. The vehicle front structure according to claim 7, **characterised in that** the opening (10) is a cut-out.

9. The vehicle front structure according to any of claims 7 - 8, **characterised in that** the opening (10) is arranged at an end part (11) of the beam member (2), which end part (11) is adapted to be arranged adjacent to a front window (12) of the vehicle (7).

10. The vehicle front structure according to any of claims 7 - 9, **characterised in that** the hood hinge (4) is arranged to pivot perpendicular to the longitudinal extension of the opening (10).

11. The vehicle front structure according to any of claims 7 - 10, **characterised in that** the hood hinge (4), when the hood (5) is in a closed position, is arranged within the beam member (2).

12. The vehicle front structure according to any of claims 7 - 11, **characterised in that** the hood hinge bracket (3) is attached to the beam member (2) via a connection area (13a, 13b) on said beam member (2), where said connection area (13a, 13b) has an elongation which is substantially parallel with said folds (9a, 9b, 9c, 9d, 9e, 9f).

## Patentansprüche

1. Trägerelementanordnung (1), die ein Trägerelement (2) mit einer longitudinalen Erstreckung und einen Haubenscharnierarm (3), an dem ein Haubenscharnier (4) zum Öffnen und Schließen einer Haube (5) eines Motorraums (6) eines Fahrzeugs (7) befestigt werden kann, umfasst, wobei das Trägerelement (2) ein Hohlprofil besitzt, das durch eine Umfangsoberfläche (8a, 8b, 8c, 8d, 8e, 8f) gebildet ist, die zahlreiche in Längsrichtung verlaufende Falze (9a, 9b, 9c, 9d, 9e, 9f) besitzt, wobei das Trägerelement (2) dazu ausgelegt ist, in Längsrichtung längs eines oberen Teils des Motorraums (6) zu verlaufen, **dadurch gekennzeichnet, dass** die Umfangsoberfläche (8a, 8b, 8c, 8d, 8e, 8f) eine Öffnung (10) besitzt, die zwischen zwei benachbarten Falzen (9a, 9b) angeordnet ist, wobei die Öffnung (10) und der Haubenscharnierarm (3) relativ zueinander so angeordnet sind, dass dann, wenn das Haubenscharnier (4) an dem Haubenscharnierarm (3) befestigt ist, das Haubenscharnier (4) zwischen einer Außenseite und einer Innenseite des Trägerelements (2) beweglich ist.

2. Trägerelementanordnung (1) nach Anspruch 1, **dadurch gekennzeichnet, dass** das Trägerelement (2) sechs in Längsrichtung verlaufende Falze (9a, 9b, 9c, 9d, 9e, 9f) umfasst.

3. Trägerelementanordnung (1) nach einem der Ansprüche 1-2, **dadurch gekennzeichnet, dass** die in Längsrichtung verlaufende Falze (9a, 9b, 9c, 9d, 9e, 9f) in dem Trägerelement (2) relativ zueinander parallel sind.

4. Trägerelementanordnung (1) nach einem der Ansprüche 1-3, **dadurch gekennzeichnet, dass** das Trägerelement (2) eine im Wesentlichen sechseckige Querschnittsform besitzt.

5. Trägerelementanordnung (1) nach einem der Ansprüche 1-4, **dadurch gekennzeichnet, dass** das Trägerelement (2) einen geschlossenen Querschnitt besitzt.

6. Trägerelementanordnung (1) nach einem der Ansprüche 1-5, **dadurch gekennzeichnet, dass** das Trägerelement (2) aus Aluminium hergestellt ist.

7. Fahrzeugvorderaufbau, der die Trägerelementanordnung (1) nach einem der vorhergehenden Ansprüche aufweist, **dadurch gekennzeichnet, dass** das Trägerelement (2) in dem Fahrzeug (7) so angeordnet ist, dass die Öffnung (10) nach oben weist.

8. Fahrzeugvorderaufbau nach Anspruch 7, **dadurch gekennzeichnet, dass** die Öffnung (10) ein Ausschnitt ist.

9. Fahrzeugvorderaufbau nach einem der Ansprüche 7-8, **dadurch gekennzeichnet, dass** die Öffnung (10) an einem Endabschnitt (11) des Trägerelements (2) angeordnet ist, wobei sich der Endabschnitt (11) in der Nähe einer Frontscheibe (12) des Fahrzeugs (7) befinden kann.

10. Fahrzeugvorderaufbau nach einem der Ansprüche 7-9, **dadurch gekennzeichnet, dass** das Haubenscharnier (4) dafür ausgelegt ist, senkrecht zu der Längserstreckung der Öffnung (10) zu schwenken.

11. Fahrzeugvorderaufbau nach einem der Ansprüche 7-10, **dadurch gekennzeichnet, dass** das Haubenscharnier (4) dann, wenn die Haube (5) in einer geschlossenen Stellung ist, innerhalb des Trägerelements (2) angeordnet ist.

12. Fahrzeugvorderaufbau nach einem der Ansprüche 7-11, **dadurch gekennzeichnet, dass** der Haubenscharnierarm (3) an dem Trägerelement (2) über einen Verbindungsbereich (13a, 13b) an dem Trägerelement (2) befestigt ist, wobei der Verbindungsbereich (13a, 13b) eine Erstreckung besitzt, die zu den Falzen (9a, 9b, 9c, 9d, 9e, 9f) im Wesentlichen parallel ist.

## Revendications

1. Ensemble (1) élément de poutre comprenant un élément de poutre (2) présentant une extension longitudinale et comportant une ferrure (3) d'articulation de capot à laquelle on peut fixer une charnière (4) de capot pour ouvrir et fermer le capot (5) du compartiment moteur (6) d'un véhicule (7), ledit élément de poutre (2) présentant un profil creux constitué par une surface périphérique (8a, 8b, 8c, 8d, 8e, 8f) comportant un certain nombre de plis (9a, 9b, 9c, 9d, 9e, 9f) disposés longitudinalement et lequel élément de poutre (2) étant apte à s'étendre longitudinalement le long d'une partie supérieure du compartiment moteur (6), **caractérisé en ce que** ladite surface périphérique (8a, 8b, 8c, 8d, 8e, 8f) comporte une ouverture (10) disposée entre deux plis adjacents (9a, 9b), ladite ouverture (10) et ladite ferrure (3) d'articulation de capot étant disposées l'une par rapport à l'autre de telle sorte que, quand ladite charnière (4) de capot est fixée à ladite ferrure (3) d'articulation de capot, ladite charnière (4) de capot est mobile entre l'extérieur et l'intérieur de l'élément de poutre (2).

2. Ensemble (1) élément de poutre selon la revendication 1, **caractérisé en ce que** l'élément de poutre (2) comprend six plis (9a, 9b, 9c, 9d, 9e, 9f) disposés longitudinalement.

3. Ensemble (1) élément de poutre selon la revendication 1 ou 2, **caractérisé en ce que** les plis (9a, 9b, 9c, 9d, 9e, 9f) disposés longitudinalement dans l'élément de poutre (2) sont parallèles l'un à l'autre.

4. Ensemble (1) élément de poutre selon l'une quelconque des revendications 1 à 3, **caractérisé en ce que** l'élément de poutre (2) présente une forme de section transversale sensiblement hexagonale.

5. Ensemble (1) élément de poutre selon l'une quelconque des revendications 1 à 4, **caractérisé en ce que** l'élément de poutre (2) présente une section transversale fermée.

6. Ensemble (1) élément de poutre selon l'une quelconque des revendications 1 à 5, **caractérisé en ce que** l'élément de poutre (2) est fabriqué en aluminium.

7. Structure avant de véhicule comprenant l'ensemble (1) élément de poutre selon l'une quelconque des revendications précédentes, **caractérisée en ce que** ledit élément de poutre (2) est disposé dans ledit véhicule (7) de telle sorte que ladite ouverture (10) est tournée vers le haut.

8. Structure avant de véhicule selon la revendication 7, **caractérisée en ce que** l'ouverture (10) est une échancrure.

9. Structure avant de véhicule selon la revendication 7 ou 8, **caractérisée en ce que** l'ouverture (10) est disposée au niveau d'une partie terminale (11) de l'élément de poutre (2), laquelle partie terminale (11) est apte à être disposée tout à côté du pare-brise (12) du véhicule (7).

10. Structure avant de véhicule selon l'une quelconque des revendications 7 à 9, **caractérisée en ce que** la charnière (4) de capot est disposée pour pivoter perpendiculairement à l'extension longitudinale de l'ouverture (10).

11. Structure avant de véhicule selon l'une quelconque des revendications 7 à 10, **caractérisée en ce que** la charnière (4) de capot, quand le capot (5) est en position fermée, se trouve à l'intérieur de l'élément de poutre (2).

12. Structure avant de véhicule selon l'une quelconque des revendications 7 à 11, **caractérisée en ce que** la ferrure (3) d'articulation de capot est fixée à l'élément de poutre (2) via une zone de liaison (13a, 13b) sur ledit élément de poutre (2), dans laquelle ladite zone de liaison (13a, 13b) présente une extension longitudinale qui est sensiblement parallèle auxdits plis (9a, 9b, 9c, 9d, 9e, 9f).
